(19) **Europäisches Patentamt**
**European Patent Office**
**Office européen des brevets**

(11) **EP 1 347 898 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(21) Anmeldenummer: **01271819.3**

(22) Anmeldetag: **23.11.2001**

(51) Int Cl.:
***B60T 8/00*** (2006.01)

(86) Internationale Anmeldenummer:
**PCT/DE2001/004414**

(87) Internationale Veröffentlichungsnummer:
**WO 2002/051680 (04.07.2002 Gazette 2002/27)**

(54) **VERFAHREN UND VORRICHTUNG ZUM STABILISIEREN EINES FAHRZEUGS**

METHOD AND DEVICE FOR STABILIZING A VEHICLE

PROCEDE ET DISPOSITIF POUR STABILISER UN VEHICULE

(84) Benannte Vertragsstaaten:
**DE FR**

(30) Priorität: **23.12.2000 DE 10065010**

(43) Veröffentlichungstag der Anmeldung:
**01.10.2003 Patentblatt 2003/40**

(73) Patentinhaber: **ROBERT BOSCH GMBH**
**70442 Stuttgart (DE)**

(72) Erfinder:
• **FAYE, Ian**
**70192 Stuttgart (DE)**
• **LEIMBACH, Klaus-Dieter**
**73569 Eschach (DE)**

(56) Entgegenhaltungen:
EP-A- 1 046 571   DE-A- 19 936 423
DE-C- 19 812 237

EP 1 347 898 B1

**Beschreibung**

Die Erfindung betrifft ein Verfahren zum Stabilisieren eines Fahrzeugs mit den Schritten: Erfassen charakteristischer Istgrößen, die den Fahrzustand eines Fahrzeugs beschreiben, Bestimmen von Sollgrößen, welche zumindest teilweise den Istgrößen zugeordnet sind, Vergleichen von Istgrößen und Sollgrößen und Beeinflussen von Istgrößen auf der Grundlage von Vergleichsergebnissen. Die Erfindung betrifft ferner eine Vorrichtung zum Stabilisieren eines Fahrzeugs mit Mitteln zum Erfassen charakteristischer Istgrößen, die den Fahrzustand eines Fahrzeugs beschreiben, Mitteln zum Bestimmen von Sollgrößen, welche zumindest teilweise den Istgrößen zugeordnet sind, Mitteln zum Vergleichen von Istgrößen und Sollgrößen und Mitteln zum Beeinflussen von Istgrößen auf der Grundlage von Vergleichsergebnissen.

**Stand der Technik**

Gattungsgemäße Verfahren und gattungsgemäße Vorrichtungen kommen in Systemen zum Einsatz, mit welchen die Fahrsicherheit auf der Grundlage der Fahrdynamik erhöht werden soll. Beispielsweise gibt das System FDR (Fahrdynamikregelung) dem Fahrer eines Fahrzeugs sowohl verbesserte Grundfunktionen im Hinblick auf das Antiblokkiersystem (ABS) und die Antischlupfregelung (ASR), wobei diese Systeme hauptsächlich bei längsdynamisch kritischen Situationen wirken. Beispiele hierfür sind Vollbremsungen und starke Beschleunigungen. Die Fahrdynamikregelung FDR unterstützt den Fahrer auch bei querdynamisch kritischen Situationen. Das System verbessert die Fahrstabilität in allen Betriebszuständen, das heißt bei Vollbremsungen, Teilbremsungen, Freirollen, Antrieb, Schub und Lastwechsel, sobald der fahrdynamische Grenzbereich erreicht wird. Selbst bei extremen Lenkmanövern reduziert die Fahrdynamikregelung FDR drastisch die Schleudergefahr und ermöglicht auch in kritischen Verkehrssituationen weitgehend die sichere Beherrschung des Automobils.

Zur Regelung der Fahrdynamik ist es bekannt, den Schwimmwinkel des Fahrzeugs und die Gierrate des Fahrzeugs als Regelgrößen zu verwenden. Die Berücksichtigung dieser Regelgrößen ermöglicht eine weitgehende Ausschaltung der Schleudergefahr.

Allerdings besteht neben der Schleudergefahr auch die Gefahr, dass ein Fahrzeug aufgrund extremer Fahrmanöver umkippt. Dies gilt umso mehr, da auch im Bereich der Personenkraftwagen immer häufiger Fahrzeuge angeboten werden, die einen vergleichsweise kurzen Radstand und einen hochliegenden Schwerpunkt aufweisen. Im Bereich der Nutzkraftwagen besteht das Problem einer Umkippgefahr ohnehin.

Aus der DE-A-19 936 423 ist eine Vorrichtung zum Regeln der Querneigung eines Vierradfahrzeugs während einer Kurvenfahrt bekannt. Dabei werden eine Sollverzögerung Gxt und ein Sollgiermoment Twt des Fahrzeugs wie folgt berechnet:

$$Gxt = (R/2Vx)Qrs$$

$$Twt = (I/2Vx)Qrs,$$

wobei R der Krümmungsradius der Kurve, Vx die Fahrzeuggeschwindigkeit, I das Trägheitsgiermoment des Fahrzeugs und Qrs die Sollquerneigungsunterdrückungsgröße ist, die die Dringlichkeit der Querneigungsunterdrückungsregelung angibt. Es werden ein Rad oder beide Räder wenigstens des Vorderradpaars oder des Hinterradpaars des Fahrzeugs durch eine unabhängige Steuerung so abgebremst, dass sich die Sollverzögerung und das Sollgiermoment einstellen, wodurch die Querneigung der Fahrzeugkarosserie in Schranken gehalten und gleichzeitig der Kurvenfahrkurs mit dem Radius R weiter eingehalten wird.

**Vorteile der Erfindung**

Die Erfindung baut auf dem gattungsgemäßen Verfahren dadurch auf, dass eine der erfassten Istgrößen charakteristisch für den Wankzustand des Fahrzeugs ist und dass eine der Sollgrößen der erfassten Istgröße zugeordnet ist, welche charakteristisch für den Wankzustand des Fahrzeugs ist. Auf diese Weise wird im Rahmen einer bekannten Fahrdynamikregelung zusätzlich der Wankzustand des Fahrzeugs berücksichtigt, so dass ein Umkippen eines Fahrzeugs auch bei hohem Schwerpunkt und kurzem Radstand und extremen Fahrmanövern verhindert werden kann.

Vorzugsweise ist eine der erfassten Istgrößen die Gierrate, und eine der Sollgrößen ist der Gierrate zugeordnet. Es ist also möglich, die erfindungsgemäße Regelung des Wankzustands mit der bereits im Rahmen der Fahrdynamikregelung FDR bekannten Regelung der Gierrate in vorteilhafter Weise zu kombinieren.

Ebenso ist es vorteilhaft, wenn eine der erfassten Istgrößen der Schwimmwinkel ist und wenn eine der Sollgrößen dem Schwimmwinkel zugeordnet ist. Somit lässt sich die erfindungsgemäße Regelung des Wankzustandes mit der Regelung des Schwimmwinkels kombinieren, wobei Letztere aus der Fahrdynamikregelung FDR bekannt ist. Besonders vorteilhaft ist es, wenn Gierratenregelung, Schwimmwinkelregelung und die Regelung des Wankzustandes in einem System integriert sind.

Erfindungsgemäß ist die für den Wankzustand des Fahrzeugs charakteristische Istgröße der Wankwinkel ist. Es ist also möglich, den Wankwinkel direkt zu messen und auf diese Weise den Wankzustand des Fahrzeugs zu erfassen.

Alternativ dazu ist erfindungsgemäß die für den Wankzustand des Fahrzeugs charakteristische Größe eine Druckänderung in einer Luftfeder des Fahrzeugs. Besonders Nutzkraftfahrzeuge sind häufig mit Luftfedern ausgestattet, so dass die Druckänderung in vorteilhafter Weise für die Erfassung des Wankzustandes herangezogen werden kann.

Bevorzugt werden Sollgrößen aus den Eingangsgrößen Fahrzeuggeschwindigkeit und Lenkwinkel bestimmt. Die Eingangsgrößen Fahrzeuggeschwindigkeit und Lenkwinkel werden auch bereits bei der bekannten Fahrdynamikregelung FDR verwendet, so dass es im Rahmen der Erfindung besonders vorteilhaft ist, auch zur Ermittlung der Sollgröße, welche charakteristisch für den Wankzustand des Fahrzeugs ist, diese Größen als Eingangsgrößen zu verwenden.

Vorzugsweise werden Istgrößen durch Bremseingriffe und/oder Motoreingriffe beeinflusst. Auch dies ist bei der Fahrdynamikregelung FDR beispielsweise für die Gierrate bereits bekannt. Die Beeinflussung der Istgröße, welche charakteristisch für den Wankzustand des Fahrzeugs ist, kann ebenfalls in vorteilhafter Weise durch Bremseingriffe und/oder Motoreingriffe beeinflusst werden.

Vorzugsweise wird der Wankwinkel durch einen Aktuator beeinflusst. Diese Beeinflussung kann zusätzlich oder alternativ zu dem Beeinflussen des Bremssystems und/oder des Motors erfolgen, so dass man im Hinblick auf eine Umkippverhinderung zahlreiche Maßnahmen an der Hand hat, die auf der vorliegenden Erfindung beruhen.

Es ist nützlich, dass das erfindungsgemäße Verfahren bei einem Fahrzeuggespann für die Wankregelung von Zugfahrzeug und Anhänger beziehungsweise Auflieger durchgeführt wird. Somit kann beispielsweise unabhängig für die einzelnen Teile eines Fahrzeuggespanns ein Umkippen verhindert werden, was insbesondere im Hinblick auf das Aufschaukeln von LKW-Anhängern oder von Wohnwagen, die von Personenkraftwagen gezogen werden, nützlich ist.

Die Erfindung baut auf der gattungsgemäßen Vorrichtung dadurch auf, dass eine der erfassten Istgrößen charakteristisch für den Wankzustand des Fahrzeugs ist und dass eine der Sollgrößen der erfassten Istgröße zugeordnet ist, welche charakteristisch für den Wankzustand des Fahrzeugs ist. Auf diese Weise wird im Rahmen einer bekannten Fahrdynamikregelung zusätzlich der Wankzustand des Fahrzeugs berücksichtigt, so dass ein Umkippen eines Fahrzeugs auch bei hohem Schwerpunkt und kurzem Radstand und extremen Fahrmanövern verhindert werden kann.

Vorzugsweise ist eine der erfassten Istgrößen die Gierrate, und eine der Sollgrößen ist der Gierrate zugeordnet. Es ist also möglich, die erfindungsgemäße Regelung des Wankzustands mit der bereits im Rahmen der Fahrdynamikregelung FDR bekannten Regelung der Gierrate in vorteilhafter Weise zu kombinieren.

Ebenfalls ist es nützlich, wenn eine der erfindungsgemäßen Istgrößen der Schwimmwinkel ist und wenn eine der Sollgrößen dem Schwimmwinkel zugeordnet ist. Somit lässt sich die erfindungsgemäße Regelung des Wankzustandes mit der Regelung des Schwimmwinkels kombinieren, wobei Letztere aus der Fahrdynamikregelung FDR bekannt ist. Besonders vorteilhaft ist es, wenn Gierratenregelung, Schwimmwinkelregelung und die Regelung des Wankzustandes in einem System integriert sind.

Es ist nützlich, dass Mittel zum Messen des Wankwinkels vorgesehen sind und dass die für den Wankzustand des Fahrzeugs charakteristische Istgröße der Wankwinkel ist. Es ist also möglich, den Wankwinkel direkt zu messen und auf diese Weise den Wankzustand des Fahrzeugs zu erfassen.

Es kann auch vorteilhaft sein, dass Mittel zum Messen des Druckes in einer Luftfeder des Fahrzeugs vorgesehen sind und dass die für den Wankzustand des Fahrzeugs charakteristische Istgröße eine Druckänderung ist. Besonders Nutzkraftfahrzeuge sind häufig mit Luftfedern ausgestattet, so dass die Druckänderung in vorteilhafter Weise für die Erfassung des Wankzustandes herangezogen werden kann.

Es ist besonders vorteilhaft, dass Mittel zum Messen der Fahrzeuggeschwindigkeit vorgesehen sind, dass Mittel zum Messen des Lenkwinkels vorgesehen sind und dass Sollgrößen aus den Eingangsgrößen Fahrzeuggeschwindigkeit und Lenkwinkel bestimmt werden. Die Eingangsgrößen Fahrzeuggeschwindigkeit und Lenkwinkel werden auch bereits bei der bekannten Fahrdynamikregelung FDR verwendet, so dass es im Rahmen der Erfindung besonders vorteilhaft ist, auch zur Ermittlung der Sollgröße, welche charakteristisch für den Wankzustand des Fahrzeugs ist, diese Größen als Eingangsgrößen zu verwenden.

Nützlicherweise sind Mittel zum Beeinflussen des Bremssystems und/oder des Motors vorgesehen, und Istgrößen werden durch Bremseingriffe und/oder Motoreingriffe beeinflusst. Auch dies ist bei der Fahrdynamikregelung FDR beispielsweise für die Gierrate bereits bekannt. Die Beeinflussung der Istgröße, welche charakteristisch für den Wankzustand des Fahrzeugs ist, kann ebenfalls in vorteilhafter Weise durch Bremseingriffe und/oder Motoreingriffe beeinflusst werden.

Ebenfalls kann nützlich sein, dass ein Aktuator vorgesehen ist und dass der Wankwinkel durch einen Aktuator beeinflusst wird. Diese Beeinflussung kann zusätzlich oder alternativ zu dem Beeinflussen des Bremssystems und/oder des Motors erfolgen, so dass man im Hinblick auf eine Umkippverhinderung zahlreiche Maßnahmen an der Hand hat, die auf der vorliegenden Erfindung beruhen.

Es ist von besonderem Vorteil, dass bei einem Fahrzeuggespann mehrere Wankregeleinrichtungen für das Zugfahrzeug und für Anhänger beziehungsweise Auflieger vorgesehen sind. Somit kann beispielsweise unabhängig für die einzelnen Teile eines Fahrzeuggespanns ein Umkippen verhindert werden, was insbesondere im Hinblick auf das Aufschaukeln von LKW-Anhängern oder von Wohnwagen, die von Personenkraftwagen gezogen werden, nützlich ist.

Der Erfindung liegt die Erkenntnis zugrunde, dass durch die zusätzliche Regelung eines Wankzustandes eines Fahrzeugs innerhalb einer an sich bekannten Fahrdynamikregelung eine besonders hohe Fahrsicherheit erreicht werden kann.

## Zeichnungen

Die Erfindung wird nun mit Bezug auf die begleitenden Zeichnungen anhand bevorzugter Ausführungsformen beispielhaft erläutert.

Dabei zeigt:

Figur 1    ein Blockdiagramm zur Erläuterung einer ersten Ausführungsform der Erfindung und

Figur 2    ein Blockdiagramm zur Erläuterung einer zweiten Ausführungsform der Erfindung.

## Beschreibung der Ausführungsbeispiele

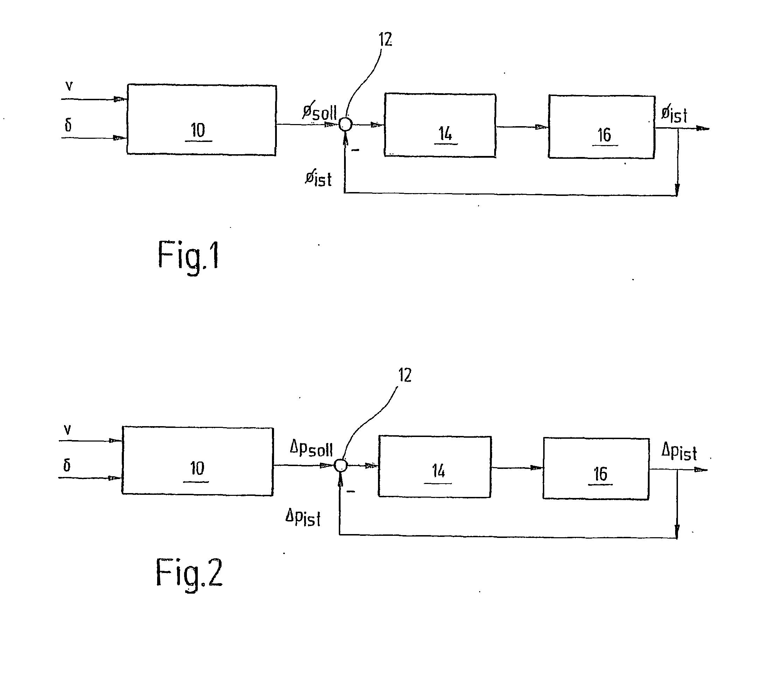

In Figur 1 ist ein Blockdiagramm zur Erläuterung einer ersten Ausführungsform der Erfindung dargestellt. Die Eingangsgrößen Fahrzeuggeschwindigkeit v und Lenkwinkel $\delta$ werden Mitteln 10 zum Bestimmen einer Sollgröße eingegeben. Diese Mittel 10 zum Bestimmen einer Sollgröße beruhen auf einem Referenzmodell, welches unter anderem den Wankwinkel des Fahrzeugs berücksichtigt. Einzelheiten des Referenzmodells werden weiter unten diskutiert. Das Referenzmodell hat als Ausgangswert einen Soll-Wankwinkel $\phi_{Soll}$. Dieser Soll-Wankwinkel $\phi_{Soll}$ ist eine der Eingangsgrößen eines Regelkreises. Die andere Eingangsgröße ist $\phi_{Ist}$. Durch Vergleich beziehungsweise Differenzbildung der Werte $\phi_{Soll}$ und $\phi_{Ist}$ in den Mitteln 12 wird das Vergleichsergebnis dem Wankregler 14 zugeführt. Dieser Wankregler 14 liefert einen Ausgangswert an Mittel 16 zum Beeinflussen der Istgröße. Diese Mittel können beispielsweise Einfluss auf das Bremssystem, den Motor oder auf eine Wankwinkelsteuerung nehmen. Der Ausgangswert des Regelkreises, welcher im vorliegenden Beispiel den Wankwinkel $\phi$ direkt regelt, wird dann als $\phi_{Ist}$ auf die Mittel 12 zum Vergleichen von Istgrößen und Sollgrößen rückgekoppelt. Diese anhand des vorliegenden Ausführungsbeispiels vereinfacht dargestellte Wankwinkelregelung lässt sich entsprechend der Regelung anderer Größen, beispielsweise der Gierrate oder des Schwimmwinkels erweitern. Zur Berücksichtigung von transienten Vorgängen kann eine Erweiterung um einen Tiefpass 1. oder 2. Ordnung erfolgen.

Wie oben erwähnt, bedienen sich die Mittel zum Bestimmen von Sollgrößen eines Referenzmodells, welches vorteilhafterweise neben dem Schwimmwinkel und der Gierrate nunmehr ebenfalls den Wankwinkel berücksichtigt. Dieses Referenzmodell beruht auf dem nachfolgend in Gleichung 1 dargestellten Differentialgleichungssystem:

$$\begin{bmatrix} m \cdot v & , & 0 & , m_s \cdot h \\ 0 & , & I_z & , - I_{xy} \\ m_s \cdot h \cdot v , & - I_{xy} , & I_x \end{bmatrix} \cdot \begin{bmatrix} \dot{\beta} \\ \ddot{\psi} \\ \ddot{\phi} \end{bmatrix} = \begin{bmatrix} Y_\beta , Y_\psi & - m \cdot v, & 0 & , Y_\phi \\ N_\beta , & N_\psi & , 0 & , N_\phi \\ 0 , & m_s \cdot h \cdot v , & L_p , & L_\phi \end{bmatrix} \cdot \begin{bmatrix} \beta \\ \psi \\ \dot{\phi} \\ \phi \end{bmatrix} + \begin{bmatrix} Y_\delta \\ N_\delta \\ 0 \end{bmatrix} \cdot$$

$$(1)$$

Dabei gelten die folgenden weiteren Beziehungen:

$$Y_\beta = -C_f - C_r$$

$$Y_\psi = \frac{-a \cdot C_f + b \cdot C_r}{v}$$

$$Y_\delta = C_f$$

$$N_\beta = -a \cdot C_f + b \cdot C_r$$

$$N_\psi = \frac{-a^2 \cdot C_f + b^2 \cdot C_r}{v}$$

$$N_\delta = a \cdot C_f$$

Die in den Gleichungen verwendeten Symbole haben die folgende Bedeutung:

$N_\phi$:    Wanklenkeinfluss,
$L_\phi$:    Wanksteifigkeit,
$L_\phi$:    Wankdämpfung,
$\beta$:    Schwimmwinkel,
$\psi$:    Gierwinkel,
$\phi$:    Wankwinkel,
$\delta$:    Rad-Lenkwinkel,
a,b:    Abstand Fahrzeugschwerpunkt zu Vorderachse bezie- hungsweise Hinterachse,
h:    Schwerpunkthöhe,
m:    Fahrzeugmasse (s: relativ zum Fahrwerk bewegliche Aufbaumasse),
l:    Massenträgheitsmoment (z: Hochachse, x: Wankachse, xy: Deviationsmoment),
v:    Fahrzeuggeschwindigkeit,
c:    Seitensteifigkeit des Reifens (f: front, r: rear).

Die stationäre Lösung dieser Gleichungen liefert ein Referenzmodell für die Fahrzeuggierrate und den Wankfreiheitsgrad:

$$\frac{\dot\psi}{\delta} = \frac{L_\phi \cdot (N_\beta \cdot Y_\delta - N_\delta \cdot Y_\beta)}{L_\phi \cdot (m \cdot v \cdot N_\beta - N_\beta \cdot Y_\psi + N_\psi \cdot Y_\beta) + m_s \cdot h \cdot v \cdot (N_\phi \cdot Y_\beta - N_\beta \cdot Y_\phi)}$$

$$\frac{\phi}{\delta} = \frac{m_s \cdot h \cdot v \cdot (N_\beta \cdot Y_\delta - N_\delta \cdot Y_\beta)}{L_\phi \cdot (m \cdot v \cdot N_\beta - N_\beta \cdot Y_\psi + N_\psi \cdot Y_\beta) + m_s \cdot h \cdot v \cdot (N_\phi \cdot Y_\beta - N_\beta \cdot Y_\phi)} \qquad (2)$$

Somit erhält man die Soll-Gierrate

$$\dot{\psi} = f(\delta, vf)$$

als Funktion des Lenkwinkels und der Fahrzeuggeschwindigkeit, wobei vf eine Geschwindigkeitsgröße ist, welche die Geschwindigkeit in Längsrichtung beschreibt. In vergleichbarer Weise erhält man einen Soll-Wankwinkel

$$\phi = f(\delta, vf),$$

welcher ebenfalls eine Funktion des Lenkwinkels und der Geschwindigkeitsgröße vf ist.

Steht keine explizite Messung des Wankwinkels zur Verfügung, so kann man dennoch über die Messung anderer Größen, die eine Wankbewegung des Fahrzeugs charakterisieren, eine indirekte Wankwinkelregelung realisieren. Dies erfordert allerdings eine entsprechende Anpassung des Referenzmodells an die jeweils herangezogene Messgröße.

Figur 2 zeigt ein Beispiel für eine indirekte Wankregelung. In den Mitteln 10 zum Bestimmen von Sollgrößen wird ein modifiziertes Referenzmodell verwendet, welches weiter unten im Detail erläutert wird. Als Regelgröße wird im vorliegenden Fall eine Druckänderung $\Delta p$ verwendet, wobei Druckwerte, die beispielsweise in Luftfederungen von Nutzkraftwagen gemessen werden, heranzuziehen sind. Als Referenzmodell wird ein modifiziertes Referenzmodell verwendet, welches die Druckänderungsdynamik berücksichtigt. Dieses wird weiter unten im Detail dargestellt. Dem Wankregler 14 wird das Ausgangssignal einer Differenzbildung 12 zugeführt, wobei die Differenz eines Wertes $\Delta p_{soll}$, welcher ein Ausgangswert der Mittel 10 ist, und eines Messwertes $\Delta p_{ist}$ gebildet, welcher der Ausgangswert des Regelkreises ist. Der Wankregler gibt ein Ausgangssignal an die Mittel 16 zum Beeinflussen der Istgrößen aus. Diese Mittel können wiederum das Bremssystem, die Motorsteuerung oder eine spezielle Aktorik zur Beeinflussung des Wankwinkels enthalten.

Das Referenzmodell beruht auf dem folgenden Differentialgleichungssystem:

$$\begin{bmatrix} m \cdot v & , & 0 & , & m_s \cdot h & , & 0 \\ 0 & , & I_z & , & -I_{xy} & , & 0 \\ m_s \cdot h \cdot v & , & -I_{xy} & , & I_x & , & 0 \\ 0 & , & 0 & , & 0 & , & 1 \end{bmatrix} \cdot \begin{bmatrix} \dot{\beta} \\ \ddot{\psi} \\ \ddot{\phi} \\ \Delta\dot{p} \end{bmatrix} =$$
$$\qquad (3)$$

$$\begin{bmatrix} Y_\beta & , & Y_\psi - m \cdot v & , & 0 & , & Y_\phi & , & 0 \\ N_\beta & , & N_\psi & , & 0 & , & N_\phi & , & 0 \\ 0 & , & m_s \cdot h \cdot v & , & L_p & , & L_\phi & , & \tilde{A}_k \\ 0 & , & 0 & , & Q_{\dot\phi} & , & Q_\phi & , & Q_{\Delta p} \end{bmatrix} \cdot \begin{bmatrix} \beta \\ \dot{\psi} \\ \dot{\phi} \\ \phi \\ \Delta p \end{bmatrix} \cdot \begin{bmatrix} Y_\delta \\ N_\delta \\ 0 \\ 0 \end{bmatrix} \cdot \delta$$

Dieses Differentialgleichungssystem hat die stationäre Lösung:

$$\frac{\dot{\psi}}{\delta} = \frac{L_\phi \cdot (N_\beta \cdot Y_\delta - N_\delta \cdot Y_\beta)}{L_\phi \cdot (m \cdot v \cdot N_\beta - N_\beta \cdot Y_\psi + N_\psi \cdot Y_\beta) + m_s \cdot h \cdot v \cdot (N_\phi \cdot Y_\beta - N_\beta \cdot Y_\phi)}$$

$$\frac{\phi}{\delta} = \frac{m_s \cdot h \cdot v \cdot (N_\beta \cdot Y_\delta - N_\delta \cdot Y_\beta)}{L_\phi \cdot (m \cdot v \cdot N_\beta - N_\beta \cdot Y_\psi + N_\psi \cdot Y_\beta) + m_s \cdot h \cdot v \cdot (N_\phi \cdot Y_\beta - N_\beta \cdot Y_\phi)} \qquad (4)$$

$$\frac{\Delta p}{\delta} = \frac{-\tilde{A}_k \cdot m_s \cdot h \cdot v \cdot (N_\beta \cdot Y_\delta - N_\delta \cdot Y_\beta)}{\tilde{Q}_p \cdot (L_\phi \cdot (m \cdot v \cdot N_\beta - N_\beta \cdot Y_\psi + N_\psi \cdot Y_\beta) + m_s \cdot h \cdot v \cdot (N_\phi \cdot Y_\beta - N_\beta \cdot Y_\phi))}$$

Die Größen Q, $\tilde{Q}$ und $\tilde{A}$ sind Linearisierungskoeffizienten, welche pneumatische Größen wie Flusskoeffizienten und Kolbenquerschnitt betreffen. Diese Linearisierungskoeffizienten dienen der linearisierten Näherung bei der Lösung der hochgradig nicht-linearen Differentialgleichungen betreffend die Druckänderungsdynamik in einer Luftfederung.

Es wird also eine Solldruckänderung Δp = f(δ, vf) als Funktion des Lenkwinkels und der die Geschwindigkeit in Längsrichtung charakterisierenden Größe vf angegeben. Demnach lässt sich eine Druckregelung aufbauen, die indirekt auf den Wankfreiheitsgrad wirkt.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.


**Patentansprüche**

1. Verfahren zum Stabilisieren eines Fahrzeugs mit den Schritten:

   - Erfassen charakteristischer Istgrößen, die den Fahrzustand eines Fahrzeugs beschreiben,
   - Bestimmen von Sollgrößen, welche zumindest teilweise den Istgrößen zugeordnet sind,
   - Vergleichen von Istgrößen und Sollgrößen und
   - Beeinflussen von Istgrößen auf der Grundlage von Vergleichsergebnissen, **dadurch gekennzeichnet,**
   - **dass** eine der erfassten Istgrößen ein für den Wankzustand des Fahrzeugs charakteristischer Wankwinkel oder eine für den Wankzustand des Fahrzeugs charakteristische Druckänderung in einer Luftfeder des Fahrzeugs ist und
   - **dass** diese Istgröße in Mitteln zum Vergleichen mit ihrer zugeordneten Sollgröße, einem Soll-Wankwinkel oder einer Soll-Druckänderung in der Luftfeder, verglichen wird.

2. Verfahren nach Anspruch 1, **dadurch gekennzeichnet,**

   - **dass** eine der erfassten Istgrößen die Gierrate ist und
   - **dass** eine der Sollgrößen der Gierrate zugeordnet ist.

3. Verfahren nach Anspruch 1 oder 2, **dadurch gekennzeichnet,**

   - **dass** eine der erfassten Istgrößen der Schwimmwinkel ist und
   - **dass** eine der Sollgrößen dem Schwimmwinkel zugeordnet ist.

4. Verfahren nach einem der vorangehenden Ansprüche, **dadurch gekennzeichnet, dass** Sollgrößen aus den Eingangsgrößen Fahrzeuggeschwindigkeit und Lenkwinkel bestimmt werden.

5. Verfahren nach einem der vorangehenden Ansprüche, **dadurch gekennzeichnet, dass** Istgrößen durch Bremseingriffe und/oder Motoreingriffe beeinflusst werden.

6. Verfahren nach einem der vorangehenden Ansprüche, **dadurch gekennzeichnet, dass** der Wankwinkel durch einen Aktuator beeinflusst wird.

**7.** Verfahren nach einem der vorangehenden Ansprüche, **dadurch gekennzeichnet, dass** es bei einem Fahrzeuggespann für die Wankregelung von Zugfahrzeug und Anhänger beziehungsweise Auflieger durchgeführt wird.

**8.** Vorrichtung zum Stabilisieren eines Fahrzeugs mit

- Mitteln zum Erfassen charakteristischer Istgrößen, die den Fahrzustand eines Fahrzeugs beschreiben,
- Mitteln (10) zum Bestimmen von Sollgrößen, welche zumindest teilweise den Istgrößen zugeordnet sind,
- Mitteln (12) zum Vergleichen von Istgrößen und Sollgrößen und
- Mitteln (16) zum Beeinflussen von Istgrößen auf der Grundlage von Vergleichsergebnissen, **dadurch gekennzeichnet,**
- **dass** Mittel zum Messen eines für den Wankzustand des Fahrzeugs charakteristischen Wankwinkels oder Mittel zum Messen eines für den Wankzustand des Fahrzeugs charakteristischen Druckes in einer Luftfeder des Fahrzeugs vorgesehen sind, wobei der Wankwinkel oder eine Druckänderung in der Luftfeder des Fahrzeugs eine der erfassten Istgrößen ist, und
- **dass** diese Istgröße in den Mitteln (12) zum Vergleichen mit ihrer zugeordneten Sollgröße, einem Soll-Wankwinkel oder einer Soll-Druckänderung in der Luftfeder, verglichen wird.

**9.** Vorrichtung nach Anspruch 8, **dadurch gekennzeichnet,**

- **dass** eine der erfassten Istgrößen die Gierrate ist und
- **dass** eine der Sollgrößen der Gierrate zugeordnet ist.

**10.** Vorrichtung nach Anspruch 8 oder 9, **dadurch gekennzeichnet,**

- **dass** eine der erfassten Istgrößen der Schwimmwinkel ist und
- **dass** eine der Sollgrößen dem Schwimmwinkel zugeordnet ist.

**11.** Vorrichtung nach einem der Ansprüche 8 bis 10, **dadurch gekennzeichnet,**

- **dass** Mittel zum Messen der Fahrzeuggeschwindigkeit vorgesehen sind,
- **dass** Mittel zum Messen des Lenkwinkels vorgesehen sind und
- **dass** Sollgrößen aus den Eingangsgrößen Fahrzeuggeschwindigkeit und Lenkwinkel bestimmt werden.

**12.** Vorrichtung nach einem der Ansprüche 8 bis 11, **dadurch gekennzeichnet,**

- **dass** Mittel zum Beeinflussen des Bremssystems und/oder des Motors vorgesehen sind und
- **dass** Istgrößen durch Bremseingriffe und/oder Motoreingriffe beeinflusst werden.

**13.** Vorrichtung nach einem der Ansprüche 8 bis 12, **dadurch gekennzeichnet,**

- **dass** ein Aktuator vorgesehen ist und
- **dass** der Wankwinkel durch einen Aktuator beeinflusst wird.

**14.** Vorrichtung nach einem der Ansprüche 8 bis 13, **dadurch gekennzeichnet, dass** bei einem Fahrzeuggespann mehrere Wankregeleinrichtungen für das Zugfahrzeug und Anhänger beziehungsweise Auflieger vorgesehen sind.

**Claims**

**1.** Method for stabilizing a vehicle, having the steps of:

- detecting characteristic actual variables which describe the driving state of a vehicle,
- determining desired variables which are at least partially associated with the actual variables,
- comparing actual variables and desired variables, and
- influencing actual variables on the basis of comparison results, **characterized**
- **in that** one of the detected actual variables is a roll angle, which is characteristic of the roll state of the vehicle, or a pressure change in an air spring of the vehicle, which pressure change is characteristic of the roll state of the vehicle, and

- **in that** this actual variable is compared, in comparison means, with its associated desired variable, a desired roll angle or a desired pressure change in the air spring.

2. Method according to Claim 1, **characterized**

   - **in that** one of the detected actual variables is the yaw rate, and
   - **in that** one of the desired variables is associated with the yaw rate.

3. Method according to Claim 1 or 2, **characterized**

   - **in that** one of the detected actual variables is the attitude angle, and
   - **in that** one of the desired variables is associated with the attitude angle.

4. Method according to one of the preceding claims, **characterized in that** desired variables are determined from the input variables of the vehicle speed and the steering angle.

5. Method according to one of the preceding claims, **characterized in that** actual variables are influenced by brake interventions and/or engine interventions.

6. Method according to one of the preceding claims, **characterized in that** the roll angle is influenced by an actuator.

7. Method according to one of the preceding claims, **characterized in that**, in the case of a vehicle combination, said method is carried out in order to control the roll of the towing vehicle and trailer.

8. Device for stabilizing a vehicle, having

   - means for detecting characteristic actual variables which describe the driving state of a vehicle,
   - means (10) for determining desired variables which are at least partially associated with the actual variables,
   - means (12) for comparing actual variables and desired variables, and
   - means (16) for influencing actual variables on the basis of comparison results, **characterized**
   - **in that** means for measuring a roll angle, which is characteristic of the roll state of the vehicle, or means for measuring a pressure in an air spring of the vehicle, which pressure is characteristic of the roll state of the vehicle, are provided, the roll angle or a pressure change in the air spring of the vehicle being one of the detected actual variables, and
   - **in that** this actual variable is compared, in the comparison means (12), with its associated desired variable, a desired roll angle or a desired pressure change in the air spring.

9. Device according to Claim 8, **characterized**

   - **in that** one of the detected actual variables is the yaw rate, and
   - **in that** one of the desired variables is associated with the yaw rate.

10. Device according to Claim 8 or 9, **characterized**

    - **in that** one of the detected actual variables is the attitude angle, and
    - **in that** one of the desired variables is associated with the attitude angle.

11. Device according to one of Claims 8 to 10, **characterized**

    - **in that** means for measuring the vehicle speed are provided,
    - **in that** means for measuring the steering angle are provided, and
    - **in that** desired variables are determined from the input variables of the vehicle speed and the steering angle.

12. Device according to one of Claims 8 to 11, **characterized**

    - **in that** means for influencing the brake system and/or the engine are provided, and
    - **in that** actual variables are influenced by brake interventions and/or engine interventions.

13. Device according to one of Claims 8 to 12, **characterized**

- **in that** an actuator is provided, and
- **in that** the roll angle is influenced by an actuator.

14. Device according to one of Claims 8 to 13, **characterized in that**, in the case of a vehicle combination, a plurality of roll control devices are provided for the towing vehicle and trailer.

**Revendications**

1. Procédé de stabilisation d'un véhicule, présentant les étapes qui consistent à :

- détecter des grandeurs caractéristiques effectives qui décrivent l'état de roulage d'un véhicule,
- déterminer des grandeurs de consigne dont au moins une partie est associée aux grandeurs effectives,
- comparer les grandeurs effectives aux grandeurs de consigne et
- agir sur les grandeurs effectives sur la base des résultats de la comparaison,

**caractérisé en ce que**
l'une des grandeurs effectives détectées est un angle de dérive caractéristique d'un état de dérive du véhicule ou une modification de pression d'un amortisseur pneumatique du véhicule, caractéristique d'un état de dérive du véhicule et
**en ce que** cette grandeur effective est comparée dans des moyens de comparaison à la grandeur de consigne qui lui est associée, à un angle de dérive de consigne ou à une modification de la pression de consigne de l'amortisseur pneumatique.

2. Procédé selon la revendication 1, **caractérisé en ce que** l'une des grandeurs effectives détectée est la vitesse de lacet et **en ce que** l'une des grandeurs de consigne est associée à la vitesse de lacet.

3. Procédé selon la revendication 1 ou 2, **caractérisé en ce que** l'une des grandeurs de consigne détectée est l'angle de flottement et **en ce que** l'une des grandeurs de consigne est associée à l'angle de flottement.

4. Procédé selon l'une des revendications précédentes, **caractérisé en ce que** des grandeurs de consigne sont déterminées à partir des grandeurs d'entrée vitesse du véhicule et angle de direction.

5. Procédé selon l'une des revendications précédentes, **caractérisé en ce que** l'on agit sur les grandeurs effectives par intervention sur les freins et/ou sur le moteur.

6. Procédé selon l'une des revendications précédentes, **caractérisé en ce qu'**un actionneur agit sur l'angle de dérive.

7. Procédé selon l'une des revendications précédentes, **caractérisé en ce qu'**il est exécuté sur un véhicule tractant une remorque pour la régulation de la dérive du véhicule tracteur et de la remorque ou de la semi-remorque.

8. Dispositif de stabilisation d'un véhicule, qui présente

- des moyens de détection de grandeurs effectives caractéristiques qui décrivent l'état de roulage du véhicule,
- des moyens (10) qui déterminent des grandeurs de consigne dont au moins une partie est associée aux grandeurs effectives,
- des moyens (12) qui comparent les grandeurs effectives aux grandeurs de consigne et
- des moyens (16) qui agissent sur les grandeurs effectives sur la base des résultats de la comparaison,
**caractérisé en ce que**

il présente des moyens de mesure d'un angle de dérive caractéristique de l'état de dérive du véhicule ou des moyens de mesure d'une pression caractéristique de l'état de dérive du véhicule dans un amortisseur pneumatique du véhicule, l'angle de dérive ou une modification de pression dans l'amortisseur pneumatique du véhicule étant l'une des grandeurs effectives détectées et
**en ce que** cette grandeur effective est comparée dans les moyens (12) de comparaison à la grandeur de consigne qui lui est associée, à un angle de dérive de consigne ou à une modification de pression de consigne de l'amortisseur pneumatique.

9. Dispositif selon la revendication 8, **caractérisé en ce que** l'une des grandeurs effectives détectées est la vitesse de lacet et **en ce que** l'une des grandeurs de consigne est associée à la vitesse de lacet.

10. Dispositif selon la revendication 8 ou 9, **caractérisé en ce que** l'une des grandeurs de consigne détectée est l'angle de flottement et **en ce que** l'une des grandeurs de consigne est associée à l'angle de flottement.

11. Dispositif selon l'une des revendications 8 à 10, **caractérisé en ce qu'**il présente des moyens de mesure de la vitesse du véhicule, **en ce qu'**il présente des moyens de mesure de l'angle de direction et **en ce que** les grandeurs de consigne sont déterminées à partir des grandeurs d'entrée vitesse du véhicule et angle de direction.

12. Dispositif selon l'une des revendications 8 à 11, **caractérisé en ce qu'**il présente des moyens qui agissent sur le système de freinage et/ou sur le moteur et **en ce que** l'on agit sur les grandeurs effectives par intervention sur les freins et/ou sur le moteur.

13. Dispositif selon l'une des revendications 8 à 12, **caractérisé en ce qu'**il présente un actionneur et **en ce qu'**un actionneur agit sur l'angle de dérive.

14. Dispositif selon l'une des revendications 8 à 13, **caractérisé en ce que** dans le cas d'un véhicule tractant une remorque, plusieurs dispositifs de régulation de dérive sont prévus pour le véhicule tracteur et la remorque ou la semi-remorque.

EP 1 347 898 B1

v

δ

10

$\varnothing_{soll}$

12

14

16

$\varnothing_{ist}$

$\varnothing_{ist}$

−

Fig.1

v

δ

10

$\Delta p_{soll}$

12

14

16

$\Delta p_{ist}$

$\Delta p_{ist}$

−

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19936423 A